## Europäisches Patentamt
## European Patent Office
## Office européen des brevets

(19)

(11) Veröffentlichungsnummer: **0 275 815**
**B1**

(12)
# EUROPÄISCHE PATENTSCHRIFT

(45) Veröffentlichungstag der Patentschrift:
**11.04.90**

(51) Int. Cl.⁴: **F16L 13/14, B60T 11/10**

(21) Anmeldenummer: **87730129.1**

(22) Anmeldetag: **14.10.87**

(54) **Rohrverbindung für dünnwandige, kleinkalibrige Metallrohre.**

(30) Priorität: **21.01.87 DE 3701555**

(43) Veröffentlichungstag der Anmeldung:
**27.07.88 Patentblatt 88/30**

(45) Bekanntmachung des Hinweises auf die Patenterteilung:
**11.04.90 Patentblatt 90/15**

(84) Benannte Vertragsstaaten:
**AT BE DE ES FR GB IT NL SE**

(56) Entgegenhaltungen:
**DE-A- 3 400 638**
**GB-A- 2 032 034**

(73) Patentinhaber: **BUNDY GmbH, Postfach 10 39 40, D-6900 Heidelberg(DE)**

(72) Erfinder: **Müffke, Walter, Dipl.-Ing., Silcherstrasse 5, D-6901 Wiesenbach(DE)**
Erfinder: **Raschdorff, Günter, Karl-Metz-Strasse 13, D-6904 Eppelheim(DE)**

(74) Vertreter: **Gornott, Dietmar, Dipl.-Ing., Zilleweg 29, D-6100 Darmstadt 12(DE)**

ACTORUM AG

## Beschreibung

Die Erfindung betrifft eine Rohrverbindung für dünnwandige, kleinkalibrige Metallrohre, insbesondere Brems-, Kraftstoff- oder Hydraulikleitungen für Kraftfahrzeuge, mit einer Hülse, in der zumindest ein erstes konisch gebördeltes Metallrohr in einem Bohrungskonus unter der Anpreßkraft eines gegen den Bördel anliegenden Spannkörpers dichtend eingesetzt ist.

Derartige Rohrverbindungen werden im Kraftfahrzeugbau an schwierig zugänglichen, weil raumbeengten Stellen, einesetzt und müssen an diesen Stellen mit Spezialwerkzeugen gebildet werden. Die höheren Flüssigkeitsdrücke in den Leitungen erforder entsprechende Dichtsitze und entsprechende Preßkräfte auf die Dichtsitze.

Der Anmelderin ist eine Ausführungsform bekannt, die aus einer Hülse besteht, in die beidseitig, jeweils gegen getrennte Dichtsitze jeweils ein erstes konisch doppeltgebördeltes Metallrohr und ein zweites einfachkonisch gebördeltes Metallrohr gegen den Dichtsitz mittels Schraubmuttern gepreßt werden. Hier muß die Schraubmutter auf beiden Metallrohren vor den Anbringung des Bördels eingesetzt werden und muß mittels Schraubenschlüsseln festgezogen werden. Um ein dauerhaftes Dichten zu gewährleisten, sind die Schraubmuttern mit einem Spindelschaft versehen, der entsprechend lang ist.

Es ist weiterhin eine Lösung bekannt, DE-A 3 416 702, die ebenfalls eine unlösbare Verbindung zwischen Leitungen für hydraulische Bremsanlagen und das Problem des erforderlichen Montageraums betrifft. Hierbei wird eine Armatur (Hülse) vorausgesetzt, die mit Gewindelöchern gefertigt wird, die das Anzugsgewinde in Abhängigkeit vom Rohrdurchmesser des Bremsrohres und seines Bördels festlegt. Die bekannte Lösung geht hierfür von einem Hülsenteil aus, das mit einer gewindelosen Profilbohrung versehen ist, deren Bohrungsgrund entsprechend dem Rohrbördel ausgebildet ist und bei der die Kontur des Bohrungsgrundes mit der Stirnkegelfläche des Rohrbördels am Bremsrohr formschlüssig durch Einziehen des zylindrischen Hülsenteils der Armatur auf den ausgestellten äußeren Umfang des hinteren Kegelabschnittes des Rohrbördels axial verspannt ist. Die bekannte Lösung besteht nunmehr darin, daß durch radiales Einrollen oder Einquetschen des Hülsenteils ein druckdichter Verschluß zwischen dem Rohr und der Hülse gebildet ist. Ein solches radiales Einrollen oder Einquetschen setzt jedoch ein ziemlich raumerforderndes Werkzeug voraus, das der Monteur gerade in einer Richtung betätigen muß, in der kein Raum zur Verfügung steht. Außerdem ist eine Abrollbewegung besonders schwierig bei beengten Raumverhältnissen auszuführen. Schließlich spricht gegen eine solche Lösung, daß das Einrollen der äußeren Hülse nicht ohne Beanspruchung des gebördelten Rohres selbst vorgenommen werden kann. Aus diesem Grund schlägt die bekannte Lösung zusätlich zur Führung am Außendurchmesser eines Bremsrohres am äußeren Umfang des Rohrbördels im Einrollbereich zum Stützen und/oder Dichten einen formschlüssigen Armierungsring vor.

Der Erfindung liegt die Aufgabe zugrunde, eine Rohrverbindung ohne Einschraubteile und bei Berücksichtigung des zur Verfügung stehenden geringen Montageraumes dahingehend auszugestalten, daß eine zufriedenstellende Dichtwirkung auf die Länge der Betriebszeit erzielt wird.

Die gestellte Aufgabe wird bei der eingangs bezeichneten Rohrverbindung erfindungsgemäß dadurch gelöst, daß die Hülse einen axial festlegenden Ringkanal aufweise und daß auf das erste Metallrohr eine radial teilweise dünnwandige Preßbuchse bis zum Anliegen an den Bördel geschoben ist und daß die Anpreßkraft des Bördels gegen den Dichtungssitz in axialer Richtung durch eine Soll-Verformungszone der Preßbuchse erzeugbar ist, indem die dünne Wand in den axial festlegenden Ringkanal der Hülse durch axiales Stauchen der Preßbuchse in die Hülse hinein radial verformbar ist. Durch die Anwendung einer axialen Stauchkraft wird lediglich Montageraum parallel zur Leitung benötigt. Ein Beschädigen oder Verformen des Metallrohres kann ausgeschlossen werden, weil die Preßbuchse radial innerhalb der Hülse geführt ist, so daß ein Ausweichen nach Innen gegen das Metallrohr ausgeschlossen ist. Außerdem können die erforderlichen Stauchkräfte relativ gering gehalten werden, so daß eine einfache um das Metallrohr U-förmig herumgeformte Zange genügt, um die Rohrverbindung herzustellen. Die erfindungsgemäße Rohrverbindung ist außerdem äußerst wirtschaftlich herstellbar und besteht, abgesehen von den Metallrohren, lediglich aus zwei Teilen.

In Weiterbildung der Erfindung wird vorgeschlagen, daß der Ringkanal der Hülse entgegen der Preßrichtung in bezug auf das Ende der radialen Soll-Verformungszone festgelegt ist, hingegen in Preßrichtung die radiale Soll-Verformungszone um einen freien Abschnitt überragt. Diese selbständige Erfindungsmaßnahme setzt den Metallrohr-Bördel unter eine Vorspannung, so daß bei Nachlassen der Dichtungssitz-Preßkraft die dünnwandige bzw. Soll-Verformungszone federnd zur Wirkung kommt und die Preßkraft beständig kontrolliert, d.h. kontinuierlich aufrechthält.

Nach der weiteren Erfindung ist vorgesehen, daß der Ringkanal der Hülse in Betriebslage der Preßbuchse in Preßrichtung bis über einen radial nicht verformbaren Abschnitt der Preßbuchse ragt. Dadurch bleibt die Preßbuchse im Innenraum der Hülse trotz der Verbreiterung des Ringkanales sicher geführt, und andererseits ist der Beginn der Soll-Verformungszone frei, um auch bei Verschiebungen des Metallrohr-Bördels folgen zu können.

Eine andere Verbesserung der Erfindung sieht vor, daß die radial verformbare Soll-Verforzmungszone der Preßbuchse ungleichen Dickenverlauf in dem Sinne aufweist, daß am Ende der radialen Soll-Verformungszone eine dünnste Wanddicke vorhanden ist gegenüber der Wanddicke im Bereich des freien Abschnitts des Ringkanals der Hülse. Diese Maßnehme zielt darauf, eine besonders starke federnde Wirkung der geringeren Wanddicke im Bereich des Bördels und damit eine Steigerung der vorgespannten Anpreßkraft au erzielen.

Währenddem die Erfindung die Verbindung eines Schlauches über die Hülse mit einem Metallrohr gestattet, liegt auch eine vorteilhafte Anwendungsfähigkeit für die Verbindung von zwei Metallrohren vor. Hierzu ist vorgesehen, daß ein erstes, einfachkonisch gebördeltes Metallrohr mit seinem Außenkonus in den hohlen Innenkonus eines zweiten, doppeltkonisch gebördelten Metallrohres dichtend einliegt, dessen Außenkonus in den Bohrungskonus der Hülse dichtend eingepreßt liegt. Demgemäß wird also über die Anpreßkraft der Preßbuchse der Dichtungssitz zwischen den konisch gebördelten Metallrohren gebildet.

Ausführungsbeispiele der Erfindung sind in der Zeichnung dargestellt und werden im folgenden näher beschrieben. Es zeigen:

Fig. 1 eine bekannte Rohrschraubverbindung nach dem Stand der Technik, im axialen Längsquerschnitt dargestellt,
Fig. 2 ein erstes Ausführungsbeispiel der Erfindung im axialen Längsschnitt, wobei die Preßbuchse in der Montagelange gezeichnet ist,
Fig. 3 den axialen Längsquerschnitt der ersten Ausführungsform gemäß Fig. 2 nach dem Einstauchen der Preßbuchse,
Fig. 4 für ein zweites Ausführungsbeispiel ein Metallrohr mit doppelt konischem Bördel, das in die Hülse eingesetzt ist, im axialen Längsschnitt,
Fig. 5 die Montagelage eines zweiten konisch gebördelten Metallrohres mit aufgeschobener Preßbuchse und
Fig. 6 die beiden gebördelten Metallrohre, die Hülse und die eingestauchte Preßbuchse gemäß den Fig. 4 und 5, ebenfalls in axialem Längsschnitt.

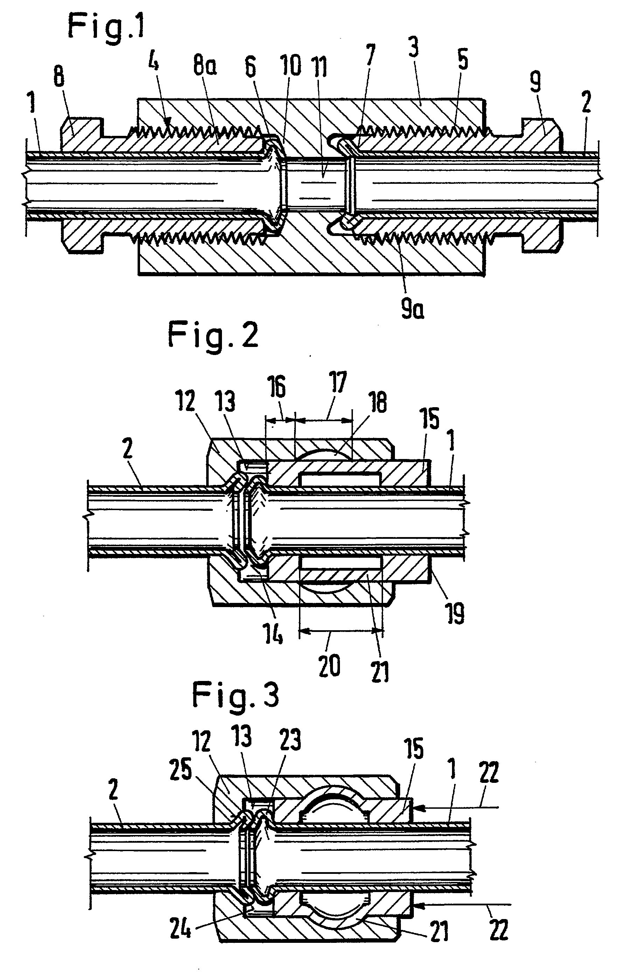

Die bekannte Rohrverbindung gemäß Fig. 1 benötigt zur Verbindung eines ersten, konischgebördelten Metallrohres 1 mit einem zweiten konisch gebördelten Metallrohr 2 eine Hülse 3, die Innengewindeabschnitte 4 und 5 erfordert. Die Bördelungen 6 und 7 werden jeweils durch spezielle Spannkörper (hier Verschraubungen) 8 und 9 gegen die Dichtsitze 10 und 11 gepreßt. Abgesehen von dem erschwerten Zugang der Spannkörper 8 und 9 sind die Verschraubunden 8a und 9a sowie das Gewinde 4 und 5 wirtschaftlich aufwendig.

Die erfindungsgemäße Rohrverbindung für dünnwandige, kleinkalibrige Metallrohre, insbesondere Brems-, Kraftstoff- oder Hydraulikleitungen für Kraftfahrzeuge ist wesentlich einfacher aufgebaut. Gegenüber der bekannten Rohrverbindung setzt gemäß einem ersten Ausführungsbeispiel (Fig. 2 und 3) die Erfindung lediglich eine Hülse 12 mit einer glatten Innenbohrung 13 voraus. Ein erstes, konisch einfachgebördeltes Metallrohr 1 sowie ein zweites konisch doppeltgebördeltes Metallrohr 2 bilden gemeinsam einen Dichtungssitz 14, der noch genauer beschrieben werden wird. Die Hülse 12 nimmt in der Innenbohrung 13 eine Preßbuchse 15 auf. Die Hülse 12 weist außerdem einen mit einem festbestimmten Abstand 16 und mit einer festbestimmten Breite 17 einen Ringkanal 18 auf. In der Preßbuchse 15 ist die Wanddicke 19 innerhalb einer Soll-Verformungszone 20 auf eine dünne Wand 21 vermindert.

Wie Fig. 3 zeigt, wird die Preßbuchse 15 durch Aufbringen einer axialen Stauchkraft 22 mit der Stirnseite gegen den Bördel 23 des ersten Metallrohres 1 gepreßt, so daß dieser den Bördel 24 des zweiten Metallrohres 2 in den Bohrungskonus 25 der Hülse 12 preßt und somit den Dichtungssitz 14 bildet. Die Fixierung dieses Zustandes wird durch das Hineinverformen der dünnen Wand 21 in den Ringkanal 18 erzielt, wobei gemäß Fig. 3 der Ringkanal 18 vollständig ausgefüllt wird. Der Stauchvorgang bewirkt in einem einzigen Preßhub das Zentrieren. Pressen und Fixieren der Metallrohre 1 und 2.

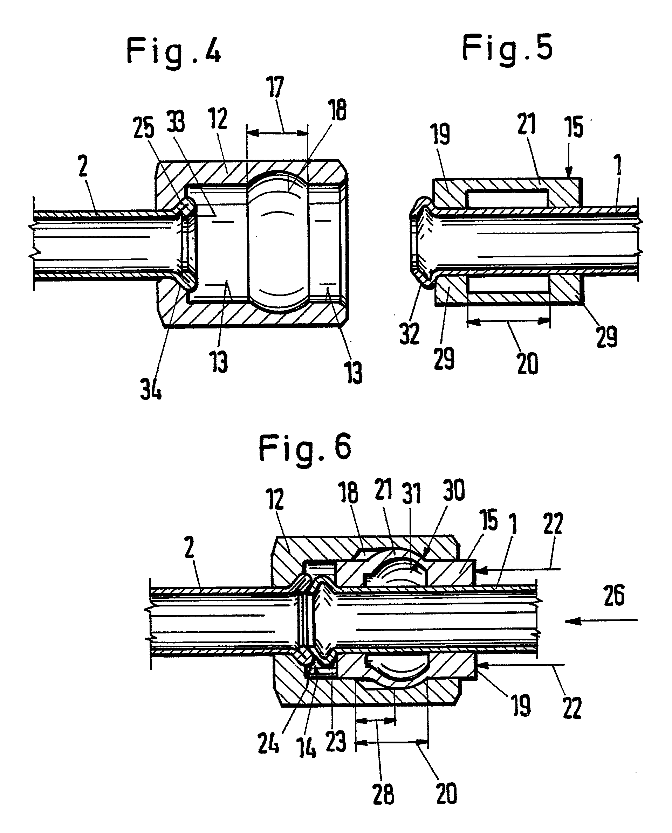

Gemäß einem zweiten Ausführungsbeispiel (Fig. 4 bis 6) ist der Ringkanal 18 der Hülse 12 entgegen der Preßrichtung 26 bezüglich dem Ende 27 festgelegt, hingegen überragt in Preßrichtung 26 ein freier Abschnitt 28 die radiale Soll-Verformungszone 20. Der Ringkanal 18 endet hierbei außerhalb der Soll-Verformungszone 20 etwa in der Mitte der normalen Wanddicke 19 der Preßbuchse 15. Dieser Abschnitt 29 der Preßbuchse 15 ist radial nicht verformbar.

Es ist auch vorteilhaft, die dünne Wand 21 nicht gleichmäßig dick, wie in Fig. 5 gezeichnet, sondern ungleichmäßig dick, wie in Fig. 6 gezeichnet, zu gestalten. Ein solcher ungleicher Dickenverlauf 30 ist in Fig. 6 angedeutet, und zwar befindet sich am Ende 27 der radialen Soll-Verformungszone 20 die dünnste Wandstelle 31, demgegenüber die größte Wanddicke 21 im Bereich des freien Abschnitts 28 des Ringkanals 18 der Hülse 12.

Die Erfindung kann auch mit nur dem ersten, einfachkonisch gebördelten Metallrohr, dessen Außenkonus 32 in dem Bohrungskonus 25 der Hülse 12 sitzt, ausgeübt werden. Dieser Fall ist anzuwenden, wenn auf einer Seite der Hülse 12 ein Schlauch in bekannter Weise anzuschließen ist.

In den beiden Ausführungbeispielen ruht der Außenkonus 32 des Metallrohres 1 in einem hohlen Innenkonus 33 eines zweiten doppelkonisch gebördelten Metallrohres 2 dichtend. Ein Außenkonus 34 des Metallrohres 2 ruht dafür im Bohrungskonus 25 der Hülse 12 dicht eingepreßt durch die Preßbuchse 15.

**Patentansprüche**

1. Rohrverbindung für dünnwandige, kleinkalibrige Metallrohre, insbesondere Brems-, Kraftstoff- oder Hydraulikleitungen für Kraftfahrzeuge, mit einer Hülse, in der zumindest ein erstes konisch gebördeltes Metallrohr in einem Bohrungskonus unter der Anpreßkraft eines gegen den Bördel anliegenden Spannkörpers dichtend eingesetzt ist, dadurch gekennzeichnet, daß die Hülse (12) einen axial festlegenden Ringkanal (18) aufweist und daß auf das erste Metallrohr (1) eine radial teilweise dünnwandige Preßbuchse (15) bis zum Anliegen an den Bördel (23) geschoben ist und daß die Anpreßkraft des Bördels (23) gegen den Dichtungssitz (14) in axialer Richtung durch eine Soll-Verformungszone (20) der Preßbuchse (15) erzeugbar ist, indem die dünne Wand (21) in den axial festlegenden Ringkanal (18) der Hülse (12) durch axiales Stauchen der Preßbuchse (15) in die Hülse (12) hinein radial verformbar ist.

2. Rohrverbindung nach Anspruch 1, dadurch gekennzeichnet, daß der Ringkanal (18) der Hülse (12) entgegen der Preßrichtung (26) in bezug auf das Ende (27) der radialen Soll-Verformungszone (20) festgelegt ist, hingegen in Preßrichtung (26) die radiale Soll-Verformungszone (20) um einen freien Abschnitt (28) überragt.

3. Rohrverbindung nach den Ansprüchen 1 und 2, dadurch gekennzeichnet, daß der Ringkanal (18) der Hülse (12) in Betriebslage der Preßbuchse (15) in Preßrichtung (26) bis über eine radial nicht verformbaren Abschnitt (29) der Preßbuchse (15) ragt.

4. Rohrverbindung nach den Ansprüchen 1 bis 3, dadurch gekennzeichnet, daß die radial verformbare Soll-Verformungszone (20) der Preßbuchse (15) einen ungleichen Dickenverlauf (30) in dem Sinn aufweist, daß am Ende (27) der radialen Soll-Verformungszone (20) eine dünnste Wanddicke (31) vorhanden ist gegenüber der Wanddicke (21) im Bereich des freien Abschnitts (28) des Ringkanals (18) der Hülse (12).

5. Rohrverbindung nach einem oder mehreren der Ansprüche 1 bis 4, dadurch gekennzeichnet, daß ein erstes, einfachkonisch gebördeltes Metallrohr (1) mit seinem Außenkonus (32) in den hohlen Innenkonus (33) eines zweiten, doppeltkonisch gebördelten Metallrohrs (2) dichtend einliegt, dessen Außenkonus (34) in den Bohrungskonus (25) der Hülse (12) dichtend eingepreßt liegt.

**Revendications**

1. Jonction de tuyaux pour tuyaux métalliques à parois minces, de petit calibre, notamment pour des conduits de freins, de carburant ou de liquide hydraulique pour véhicules automobiles, avec un manchon dans lequel est monté au moins un premier tuyau métallique à bord conique repoussé dans un cône de l'alésage, qui assure une liaison étanche sous l'effet de la pression exercée par un corps de serrage s'appuyant contre le bord, caractérisée en ce que:
   – le manchon (12) présente un canal annulaire (18) le maintenant axialement, en ce que, sur le premier tuyau métallique (1), une douille de compression (15) à parois partiellement minces est poussé dans le sens radial qui vient s'appuyer sur le bord (23) et en ce que la force de pression du bord (23) contre le siège d'étanchéité (14) peut être produite en direction axiale au moyen d'une zone de déformation théorique (20) de la douille de compression (15), tandis que la paroi mince (21) peut être déformée radialement à l'intérieur du manchon (13) dans le canal annulaire (16) du manchon (12) dans le sens axial au moyen d'un refoulement axial de la douille de compression (15).

2. Jonction de tuyaux selon la revendication 1, caractérisée en ce que le canal annulaire (18) du manchon (12) est fixé en sens contraire de la direction de compression (26) par rapport à l'extrémité (27) de la zone radiale de déformation théorique (20), mais qu'en revanche une partie libre (28) de la zone radiale de déformation théorique (20) fait saillie dans la direction de compression (26).

3. Jonction de tuyaux selon les revendications 1 et 2, caractérisée en ce que le canal annulaire (18) du manchon (12), en position de service de la douille de compression (15) dans la direction de pression (26), fait saillie jusqu'au-dessus d'une partie (29) non déformable radialement de la douille de compression (15).

4. Jonction de tuyaux selon l'une des revendications 1 à 3, caractérisée en ce que la zone théorique de déformation (20) déformable dans le sens radial de la douille de compression (15) présente un déroulement inégal de son épaisseur (30) en ce sens qu'une paroi de très mince épaisseur (31) se trouve à l'extrémité (27) de la zone théorique de déformation radiale (20) par rapport à l'épaisseur de paroi (21) dans la région de la partie libre (28) du canal annulaire (18) du manchon (12).

5. Jonction de tuyaux selon l'une ou plusieurs des revendications 1 à 4, caractérisée en ce qu'un premier tuyau métallique (1) avec un bord à cône simple repoussé est joint hermétiquement par son cône extérieur (32) au cône intérieur creux (33) d'un deuxième tuyau métallique (2) à double bord conique, dont le cône extérieur (34) est enfoncé hermétiquement dans le cône d'alésage (25) du manchon (12).

**Claims**

1. Pipe connection for thin-wall, small-diameter metal pipes, particularly brake, fuel or hydraulic lines for motor vehicles, with a sleeve in which is sealingly inserted at least one first conically flanged metal pipe in a bore cone under the contact pressure of a gripping member engaging against the flange, characterized in that the sleeve (12) has an axially fixing ring duct (18) and that on the first metal pipe (13 is placed a radially partly thin-walled pressure bush (15) until it engages with the flange (23) and that the contact pressure of flange (23) against the sealing seat (14) can be axially produced by a desired deformation zone (20) of pressure bush (15), in that the thin wall (21) can be radially deformed into the axially fixing ring duct (18) of sleeve (12) by an axial compression of the pressure bush (15) in sleeve (12).

2. Pipe connection according to claim 1, characterized in that the ring duct (18) of sleeve (12) is fixed counter to the pressing direction (26) with respect to the end (27) of the radial desired deformation zone (20), whereas in the pressing direction (26) the radial desired deformation zone (20) projects by a free portion (28).

3. Pipe connection according to claims 1 and 2, characterized in that the ring duct (18) of sleeve (12) in the operating position of the pressure bush (15) projects in the pressing direction (26) over a radially non-deformable portion (29) of bush (15).

4. Pipe connection according to claims 1 to 3, characterized in that the radially deformable desired deformation zone (20) of pressure bush (15) has a non-uniform thickness configuration (30) in the sense that on end (27) of the radial desired deformation zone (20) there is a minimum wall thickness (31), as opposed to the wall thickness (21) in the vicinity of the free portion (28) of ring duct (18) of sleeve (12).

5. Pipe connection according to one or more of the claims 1 to 4, characterized in that a first, single-conical flanged metal pipe (1) is sealingly inserted with its outer cone (32) in the hollow inner cone (33) of a second, double-conical, flanged metal pipe (2), whose outer cone (34) is sealingly pressed into the bore cone (25) of sleeve (12).

Fig.1

Fig.2

Fig.3

Fig.4

Fig.5

Fig. 6